(19) Europäisches Patentamt
European Patent Office
Office européen des brevets

(11) **EP 2 990 822 B1**

(12) **FASCICULE DE BREVET EUROPEEN**

(45) Date de publication et mention
de la délivrance du brevet:
**23.08.2017 Bulletin 2017/34**

(51) Int Cl.:
**G01S 11/04** *(2006.01)*    **G01S 11/12** *(2006.01)*
**G01S 5/02** *(2010.01)*

(21) Numéro de dépôt: **15179218.1**

(22) Date de dépôt: **31.07.2015**

(54) **PROCÉDÉ ET DISPOSITIF POUR ESTIMER LA TRAJECTOIRE D'UN OBJET EN MOUVEMENT**

VERFAHREN UND VORRICHTUNG ZUM EINSCHÄTZEN DER BEWEGUNGSBAHN EINES OBJEKTS IN BEWEGUNG

METHOD AND DEVICE FOR ESTIMATING THE PATH OF A MOVING OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.08.2014 FR 1401897**

(43) Date de publication de la demande:
**02.03.2016 Bulletin 2016/09**

(73) Titulaire: **THALES**
**92400 Courbevoie (FR)**

(72) Inventeurs:
• **THALY, Pierre**
**92622 Gennevilliers Cedex (FR)**
• **SAVCHENKO, Richard**
**92622 Gennevilliers Cedex (FR)**
• **LECCA, Arnaud**
**92622 Gennevilliers Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A1- 1 471 365      FR-A1- 2 833 084**
**US-A1- 2002 113 729    US-A1- 2011 264 309**

• **KRONHAMN T R: "Bearings-only target motion analysis based on a multihypothesis Kalman filter and adaptive ownship motion control", IEE PROCEEDINGS: RADAR, SONAR & NAVIGATION, INSTITUTION OF ELECTRICAL ENGINEERS, GB, vol. 145, no. 4, 3 août 1998 (1998-08-03), pages 247-252, XP006011433, ISSN: 1350-2395, DOI: 10.1049/IP-RSN:19982130**
• **XU ZHIGANG ET AL: "Cramer-Rao lower bounds for bearings-only maneuvering target tracking with incomplete measurements", CONTROL AND DECISION CONFERENCE, 2009. CCDC '09. CHINESE, IEEE, PISCATAWAY, NJ, USA, 17 juin 2009 (2009-06-17), pages 2201-2206, XP031500604, ISBN: 978-1-4244-2722-2**
• **RAO ET AL: "Pseudo Linear Kalman Filter For Underwater Target Location Using Intercept Sonar Measurements", PLANS 2006 - PROCEEDINGS OF IEEE/ION PLANS 2006, THE INSTITUTE OF NAVIGATION, 8551 RIXLEW LANE SUITE 360 MANASSAS, VA 20109, USA, 27 avril 2006 (2006-04-27), pages 1036-1039, XP056006399,**

**Description**

L'invention concerne un procédé pour estimer la trajectoire d'un objet par mesures d'angles et de la connaissance de la trajectoire d'un système équipé d'un moyen de mesures d'angle. Elle peut être utilisée pour déterminer la trajectoire d'objets qui communiquent par voie radioélectrique avec d'autres dispositifs dans un système de réseau de radiocommunications. Le procédé sert notamment à déterminer les paramètres de la trajectoire tels que les paramètres d'accélération, etc. Le procédé trouve son utilisation dans le domaine de la radiogoniométrie.

La localisation d'un objet en déplacement avec une vitesse similaire à celle d'un système de détection rencontre certaines difficultés techniques. La technique connue de localisation par densité ne conduit pas à des résultats satisfaisant du fait notamment des vitesses similaires entre l'objet à détecter et le système de détection. Il est connu d'utiliser des capteurs électrostatiques pour déterminer la trajectoire d'objets en déplacement. Il est aussi connu d'employer des capteurs optroniques pour déterminer la trajectoire avec laquelle un objet se déplace.

Certaines méthodes connues de l'art antérieur, par exemple celle décrite dans le brevet FR 2833084, s'appliquent pour les cas où l'objet dont on cherche à déterminer la trajectoire se déplace selon un mouvement rectiligne uniforme.

Le document de Kronhamn, intitulé « Bearings-only target motion analysis based on a multihypothesis Kalman filter and adaptive ownship motion control », IEEE, proceedings; radar, sonar&navigation, institution of electrical engineers, vol.145,n°4., 3 août 1998, pages 247-252, XP006011433, décrit un procédé pour estimer une trajectoire d'un premier objet au moyen d'une plateforme en déplacement équipée de moyens de mesures d'au moins un angle entre le premier objet et la plateforme selon une direction et qui utilise un ensemble de points correspondant à la trajectoire de la plateforme pour un intervalle de temps donné et un ensemble de valeurs d'angles sur le même intervalle de temps.

De l'avis du demandeur, les techniques décrites dans l'art antérieur sont mieux adaptées à des cas particuliers et ne fournissent pas de méthode de trajectographie pour des applications plus générales, pour des trajectoires non rectilignes: l'art antérieur ne propose pas de méthode permettant de détecter le type de trajectoire suivie par l'objet dont on veut obtenir une estimation de trajectoire.

Le procédé selon l'invention repose notamment sur l'utilisation d'une quantité de mesures d'angles limitée pour estimer la trajectoire quelconque d'un objet. Les mesures sont notamment effectuées à l'aide d'un goniomètre.

Dans la suite de la description, on rappelle tout d'abord la notion complète d'observabilité déterministe : « Un système sans bruit d'état ni de mesure est considéré comme complètement observable sur un intervalle temporel [$t_{ini}$ $t_{fin}$] si les mesures disponibles durant cette période permettent d'obtenir l'état initial de l'objet observé de façon unique. ». Ensuite, on introduit la notion de potentiel d'observabilité d'une plateforme qui correspond à la capacité à détecter des mouvements d'objets. Ce potentiel est directement lié au mouvement du système équipé du senseur. Enfin on appelle complexité d'une trajectoire le nombre minimum de dimension nécessaire afin de décrire une trajectoire donnée. Par exemple, un point peut être simplement décrit par un triplet (x,y,z) soit une complexité de 1. Aussi, un mouvement rectiligne uniforme est complètement caractérisé par un point initial ($x_0,y_0,z_0$) et une vitesse initiale ($v_{x0},vy_0, v_{z0}$) soit une complexité de 2. Il existe bien des façons de compresser l'information pour décrire une trajectoire. De fait le choix des fonctions de compression (par exemple les polynômes d'interpolation) a un impact sur la complexité. On appelera transformation compressive toute opération permettant de compresser la donnée que représentent les points d'une trajectoire. Il faut noter que les transformations compressives sont, par essence, non bijectives. On entendra donc par le terme « transformation inverse » la décompression d'une trajectoire à partir des paramètres compressés.

L'invention concerne un procédé pour estimer une trajectoire d'un premier objet au moyen d'une plateforme en déplacement équipée de moyens de mesure d'au moins un angle entre le premier objet et la plateforme selon une direction donnée comportant au moins les étapes suivantes :

- Déterminer un ensemble de points correspondant à la trajectoire de la plateforme pour un intervalle de temps donné [$t_1,..t_N$],
- Acquérir un ensemble de valeurs d'angles sur le même intervalle de temps [$t_1,..t_N$],
- Définir la complexité $C_g$ de la trajectoire de la plateforme en calculant l'erreur existant entre les points de la trajectoire partitionnés en plusieurs groupes de points et des points de la trajectoire obtenus par extrapolation après compression de la trajectoire.

Le procédé étant caractérisé en ce qu'il comporte au moins les étapes suivantes :

- Déterminer pour le même intervalle de temps [$t_1,..t_N$], la complexité $C_p$ de la trajectoire du premier objet à partir d'une valeur de complexité estimée $C_g$ de la trajectoire de la plateforme et de l'erreur calculée entre des valeurs d'angles $\theta = [\theta,..., \theta_N]$ mesurées et partitionnés en K groupes et des valeurs d'angles obtenues par extrapolation d'une trajectoire estimée de l'objet,
- Comparer la valeur de la complexité $C_g$ de la plateforme et si la valeur de la complexité de la plateforme est supérieure

EP 2 990 822 B1

à la valeur de la complexité $C_p$ de l'objet, alors estimer la trajectoire de l'objet, sinon, transmettre un signal ou une information pour ajuster la trajectoire de la plateforme.

Le procédé peut comporter les étapes suivantes :

a) estimer la complexité $C_g$ associée à la trajectoire de la plateforme en distribuant, pour une valeur de complexité définie, les points de la trajectoire de façon aléatoire en K groupes, appliquer une transformation compressive et son inverse sur un groupe de points pour obtenir un deuxième groupe de points pour chaque complexité, et extrapoler les points, puis déterminer l'erreur existant $s_{1g}$ entre les points définissant la trajectoire de la plateforme et les points obtenus par extrapolation, réitérer ces étapes en travaillant sur un ensemble de groupes de points par tirage aléatoire et sans recouvrement, puis définir une deuxième valeur d'erreur $s_{2g}$, définir la valeur d'erreur minimale et la transformation compressive associée,

b) estimer la complexité $C_p$ de la trajectoire de l'objet en mouvement à partir d'une valeur de complexité estimée de la plateforme, en construisant K groupes d'angles par tirage aléatoire sans répétition, pour chaque groupe k, en appliquant une transformation compressive inverse afin de déterminer une première trajectoire pour l'objet et en extrapolant la valeur de la première trajectoire pour les indices temporels propres au groupe k, en reconstruisant les valeurs d'angles observées par la plateforme si l'objet avait suivie cette deuxième trajectoire extrapolée, et en calculant la valeur de l'erreur pour obtenir un premier score $s_{1p}$, puis en réitérant ces étapes pour un ensemble de groupes d'angles obtenus par un découpage dans l'ordre des indices des angles et sans recouvrement et pour chaque valeur de complexité choisie, afin d'obtenir un deuxième score, définir la valeur minimale,

c) comparer la valeur de la complexité $C_g$ de la trajectoire de la plateforme et la valeur de la complexité $C_p$ de la trajectoire de l'objet et si $C_g$ est supérieure à $C_p$ alors exécuter un algorithme d'estimation de la trajectoire de l'objet, sinon modifier la complexité de la trajectoire de la plateforme.

Les valeurs d'erreur peuvent être déterminées en utilisant une méthode de calcul d'erreurs quadratiques.
On mesure des valeurs d'angles par goniométrie ou radiogoniométrie, pour un objet équipé d'un émetteur.
Dans certains cas d'utilisation, on utilise une signature de l'objet afin de déterminer les angles.
Selon un mode de mise en oeuvre du procédé, l'objet est en mouvement par rapport à la plateforme.
L'invention concerne aussi un système pour estimer une trajectoire d'un premier objet en mouvement par rapport à une plateforme en déplacement équipé de moyens de mesure d'au moins un angle entre le premier objet et la plateforme selon une direction donnée caractérisé en ce que la plateforme comporte des moyens adaptés à exécuter les étapes du procédé selon l'invention.
D'autres caractéristiques et avantages du procédé selon l'invention apparaîtront mieux à la lecture de la description qui suit d'un exemple de réalisation donné à titre illustratif et nullement limitatif annexé des figures qui représentent :

- La figure 1 un exemple de système pour la mise en oeuvre du procédé selon l'invention,
- La figure 2, une représentation dans un repère x, y, z, des paramètres utilisés pour la résolution du problème de trajectographie passive,
- La figure 3, un premier schéma bloc représentant les étapes globales du procédé selon l'invention,
- La figure 4, une représentation des étapes pour déterminer la complexité de la trajectoire d'une plateforme équipée d'un dispositif de mesures d'angle et d'une plateforme de navigation,
- La figure 5, une représentation des étapes permettant de déterminer la complexité d'un objet en mouvement.

La description qui suit est donnée à titre d'exemple illustratif et nullement limitatif pour estimer la trajectoire d'un objet en mouvement équipé d'un émetteur radioélectrique grâce à une plateforme équipée d'un radiogoniomètre, la plateforme effectuant une ou plusieurs manoeuvres entrainant un mouvement dont la complexité telle que définie précédemment devient supérieure à celle de l'objet. Le procédé permet par ailleurs d'indiquer à la plateforme si sa manoeuvre est suffisante pour estimer la trajectoire de l'objet et de proposer une idée de manoeuvre optimale afin d'améliorer la précision de localisation de l'objet. Le procédé peut être utilisé dans le cas où l'on estime que la trajectoire d'un objet peut être représentée par un point.

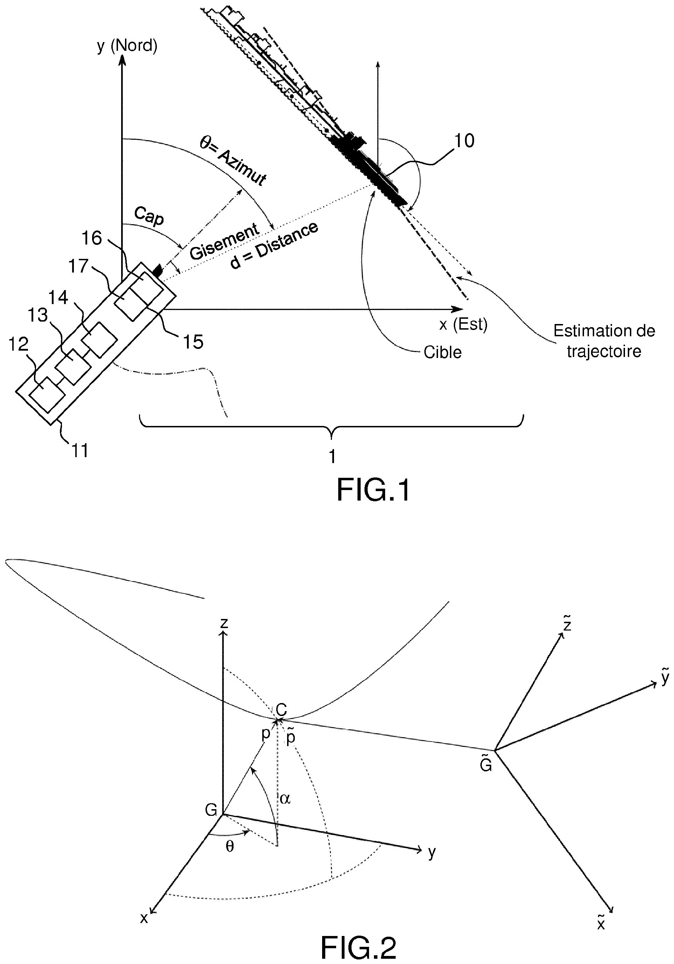

La figure 1 représente un exemple de système pour la mise en oeuvre du procédé selon l'invention. Le système 1 comporte un premier objet 10 dont on cherche à estimer la trajectoire, comprenant un émetteur de signaux et un système 11 ou plateforme équipée d'une centrale de navigation 12 permettant de connaître au cours du temps la trajectoire de la plateforme et la position d'un goniomètre 13 ou d'un radiogoniomètre permettant la mesure angulaire. La plateforme comporte un capteur 14 recevant le signal en provenance au moins de l'objet observé 10. Les informations de la centrale de navigation 12 et les informations de goniométrie fournies par le goniomètre 13 sont redirigées vers un module 15 de la plateforme 11. Le module 15 comprend un processeur 16 qui est adapté à traiter les mesures angulaires et à exécuter les étapes mises en oeuvre par le procédé selon l'invention. La plateforme 11 est aussi munie d'un espace mémoire 17 de stockage des données. Le procédé peut aussi être utilisé pour estimer la trajectoire d'objets qui n'ont pas d'émetteur, mais qui peuvent être identifiés, suivis, au moyen d'une signature qui leur est propre et qui permet de faire une mesure d'angle par rapport à un observateur.

Le procédé selon une variante de mise en oeuvre comporte en résumé, par exemple, une première phase d'initialisation au cours de laquelle on va déterminer les caractéristiques intrinsèques au radiogoniomètre, les caractéristiques du problème à observer, par exemple, la plage de vitesses des objets à observer, la plage de distance à couvrir autour de la plateforme, etc.).

Une deuxième phase active comprend par exemple les étapes suivantes :

- On effectue l'acquisition de mesures angulaires via le radiogoniomètre de la plateforme pendant une durée T donnée, en parallèle on collecte les données de navigation de la plateforme sur la même durée T,
- A partir des données de navigation, on caractérise le mouvement de la plateforme équipée du radiogoniomètre. Ceci permet d'évaluer la capacité $C_g$ de la plateforme à détecter des mouvements d'objets plus ou moins complexes, ou potentiel d'observabilité,
- On estime la complexité $C_p$ de la trajectoire de l'objet en tenant compte des valeurs d'angle mesurées,
- On compare la valeur de la complexité $C_g$ de la trajectoire de la plateforme et la valeur de la complexité $C_p$ de la trajectoire de l'objet,
- Si la valeur $C_g$ est supérieure à $C_p$ alors, on estime la trajectoire de l'objet en mouvement,
- Si la valeur $C_g$ est inférieure ou égale à $C_p$, alors il est possible de proposer un ajustement de la manoeuvre de la plateforme afin d'obtenir un potentiel d'observabilité suffisant pour estimer la trajectoire de l'objet, puis on estime la trajectoire de l'objet.

La figure 2, illustre le problème de la trajectographie passive dans un repère à trois dimensions, les paramètres utilisés, avec capteurs multiples et trajectoire curviligne, non planaire.

Le problème de la trajectographie posée dans la présente invention peut être énoncé comme suit : on considère un objet dont on souhaite connaître la trajectoire avec une capacité d'émission radio p et une plateforme munie d'un radiogoniomètre $g$ ou récepteur.

La notion de trajectoire à deux dimensions est définie comme un ensemble de fonctions continues $t \in [0;1] \rightarrow C$ où $C$ désigne le corps bien connu des complexes.

Les trajectoires de l'objet émetteur et de la plateforme récepteur sont définies dans le cas continu:

$$\begin{cases} p : t \rightarrow p(t) \\ g : t \rightarrow g(t) \end{cases}$$

Les fonctions sont échantillonnées sur $N$ échantillons pour obtenir les valeurs de la trajectoire à temps discret :

$$\begin{cases} \mathbf{P} = [\mathbf{p}_1,...,\mathbf{p}_N] \\ \mathbf{G} = [\mathbf{g}_1,...,\mathbf{g}_N] \end{cases}$$

Où :

$$\mathbf{p}_n = [x_n, y_n]^T$$

avec $[\ ]^T$ l'opérateur transposé.

Lorsque **P** ou **G** sera représenté en gras et sans indice, l'ensemble des positions aux instants de mesures des angles est considéré ici sous la forme d'une matrice de dimension $2 \times N$.

On définit une fonction de mesure d'angle entre $\mathbf{p}_n$ et $\mathbf{g}_n$ par rapport à une direction fixée, par exemple le nord magnétique,

$$\theta_n = \angle(\mathbf{p}_n - \mathbf{g}_n)$$

L'ensemble des mesures d'angles est noté $\theta = [\theta_1,...,\theta_N]$
Un bruit $\eta$ additif gaussien vient s'ajouter à la mesure d'azimuts, la séquence bruitée de mesures est la suivante :

$$\hat{\theta} = \theta + \eta$$

Le procédé selon l'invention va permettre d'estimer la trajectoire de l'objet en mouvement **P** connaissant la trajectoire de la plateforme **G** et les valeurs d'angles $\hat{\theta}$ :

$$\left(\mathbf{g}, \hat{\theta}\right) \xrightarrow{TPA} \hat{\mathbf{p}}$$

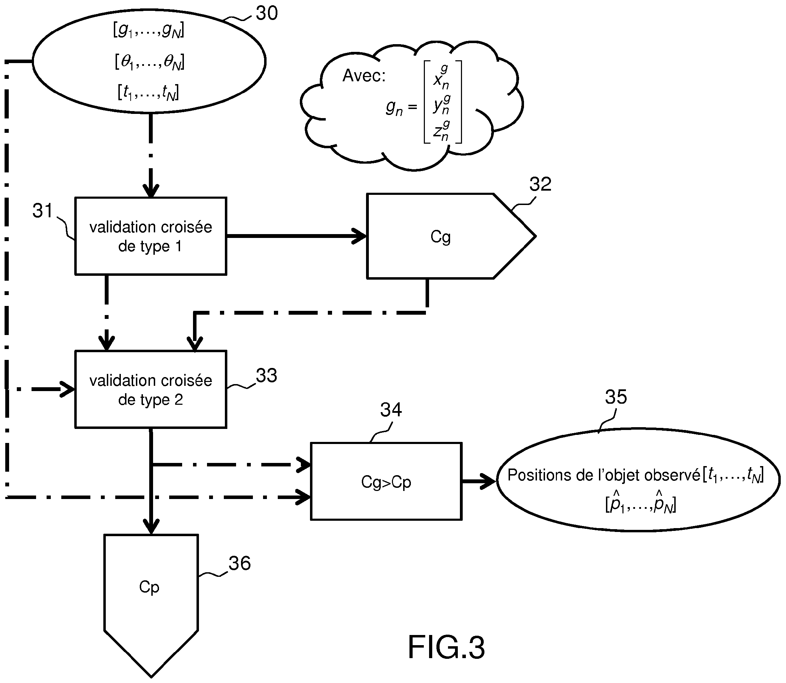

La figure 3 représente selon un schéma bloc les étapes principales du procédé selon l'invention. Les étapes sont exécutées au niveau du module 15 de la plateforme 11. Le procédé prend en compte les positions du goniomètre $\mathbf{G} = [\mathbf{g}_1,....,\mathbf{g}_N]$, les directions d'arrivées $\theta = [\theta_1,...,\theta_N]$ des signaux reçus sur le goniomètre et les instants $[t_1,...,t_N]$ de mesures $= [\theta_1,....,\theta_N]$, valeurs qui sont par exemple mémorisées au niveau de la plateforme, 30. Le procédé va caractériser, 31, le mouvement du goniomètre de la plateforme par une méthode de validation croisée de type I décrite ci-après, et déterminer la complexité $C_g$ du goniomètre, 32. Puis le procédé va caractériser, 33, le mouvement de l'objet dont on cherche à connaître la trajectoire en tenant compte du mouvement du goniomètre, de la complexité du goniomètre ou de la plateforme par une méthode de validation croisée 2. On compare ensuite la valeur de la complexité $C_p$ de la trajectoire de l'objet à celle de la trajectoire du goniomètre $C_g$. Si le goniomètre a une complexité de trajectoire supérieure à celle de l'objet à observer, alors, 34, 35, le procédé va déterminer les valeurs de positions de l'objet observé pour différents instants. Dans le cas contraire, le procédé va transmettre à l'opérateur un signal ou message l'avertissant que la complexité de la trajectoire de la plateforme n'est pas suffisante pour permettre de déterminer la trajectoire de l'objet à observer. L'opérateur peut alors ordonner le changement de la trajectoire de la plateforme.

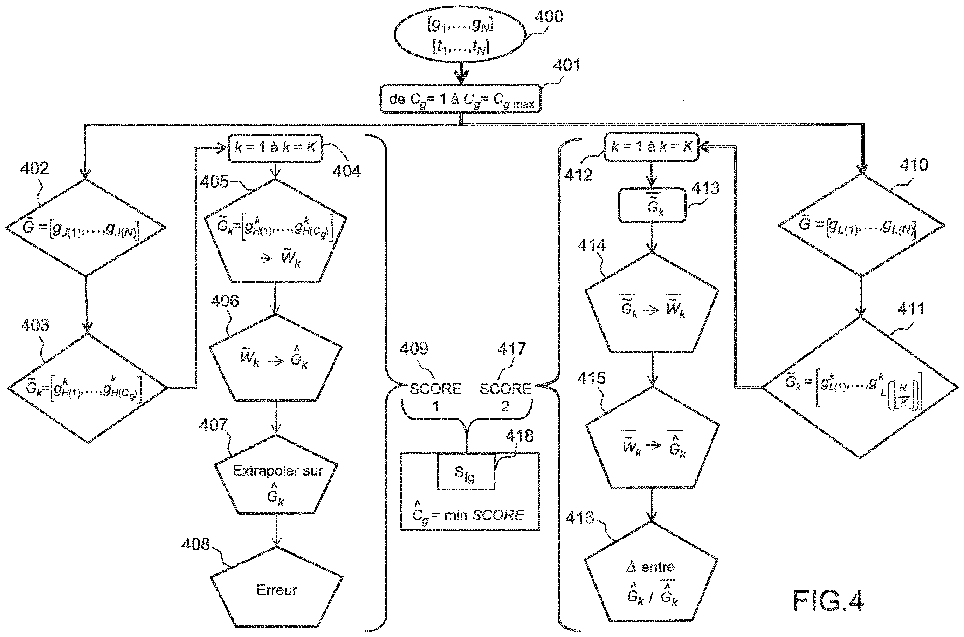

La figure 4 schématise les étapes du procédé mises en oeuvre pour la Validation croisée de type 1 permettant l'estimation de la complexité $C_g$ de la trajectoire du goniomètre.

Le procédé prend en entrée les positions mesurées du goniomètre aux instants $[t_1,...,t_N]$ pour la plateforme.

Soit $\mathbf{G} = [\mathbf{g}_1,...,\mathbf{g}_N]$ l'ensemble des positions du goniomètre,

Les valeurs des complexités possibles pour la trajectoire de la plateforme équipée du goniomètre sont choisies dans un ensemble de complexité de la trajectoire défini par un utilisateur et l'application souhaitée, $[1,... C_{g\max}]$.

Pour chaque transformation compressive T, on va exécuter les étapes décrites ci-après. Les transformations compressives peuvent être choisies, par exemple, dans un dictionnaire. On peut compresser dans l'espace de Fourier : cet espace est adapté aux trajectoires circulaires. De manière générale la transformation compressive sera choisie en fonction du type supposé de trajectoire (circulaire, continue par morceaux, fractal...).

a. boucle sur la complexité
401- Pour chaque complexité $C_g$ allant de 1 à $C_{g\max}$

i. Construire K groupes de taille $C_g$ à partir de l'ensemble des positions $\mathbf{G} = [\mathbf{g}_1,..,\mathbf{g}_N]$ de la façon suivante : 402, 403 - choisir aléatoirement des points dans l'ensemble **G** et les distribuer dans les K groupes, $\tilde{\mathbf{G}} = [\mathbf{g}_{J(1)},..,\mathbf{g}_{J(N)}]$,

$$\tilde{\mathbf{G}}_k = \left[\mathbf{g}^k_{H(1)}, ..., \mathbf{g}^k_{H(C_g)}\right].$$ La distribution peut se faire avec recouvrement de points entre les groupes : plusieurs groupes peuvent contenir le même point. Le choix aléatoire peut être une permutation aléatoire.

L'étape avec partitionnement aléatoire en K groupes avec répétition/recouvrement entre groupe conduit à $\tilde{\mathbf{G}}_k$

ii. 404, Pour tous les groupes formés, k variant de 1 à K :

ii.1. Effectuer la transformation compressive à partir des $C_g$ points du k-ième groupe, la transformation compressera la trajectoire selon $C_g$ dimensions :

$\tilde{\mathbf{G}}_k \rightarrow \tilde{\mathbf{W}}_k$ qui correspond à la version compressée de la trajectoire définie par les points contenus dans le k-ème groupe $\tilde{\mathbf{G}}_k$, 405,

ii.2. Effectuer la transformation compressive inverse pour obtenir un ensemble de points $\tilde{\mathbf{G}}_k$, 406,
ii.3. Extrapoler les points de $\tilde{\mathbf{G}}_k$, 407, à tous les indices temporels disponibles $[t_1,...,t_N]$,
ii.4. Calculer, 408, l'erreur entre les points ainsi extrapolés et les points des autres groupes qui n'appartien-

nent pas à $\hat{G}_k$, le calcul pouvant être un calcul d'erreur quadratique,

On obtient un premier score s1g (somme des erreurs quadratiques), 409, pour chaque groupe et pour chaque valeur de complexité.

Partitionner 410, $\tilde{G}$ = [$g_{L(1)}$,..., $g_{L(N)}$], 411 aléatoirement la trajectoire $G$ = [$g_1$,.... $g_N$] en K groupes contenant

$$\left\lfloor \frac{N}{K} \right\rfloor \text{ points sans recouvrement, on note } \tilde{G}_k{}^\beta \text{ ces groupes,} \qquad \tilde{\mathbf{G}}_k = \left[ \mathbf{g}^k_{L(1)}, ..., \mathbf{g}^k_{L\left(\left\lfloor \frac{N}{K} \right\rfloor\right)} \right],$$

iii. 412, Pour tous les groupes formés, k variant de 1 à K

413, Sur chaque complémentaire des groupes, points qui n'appartiennent pas au groupe considéré et notés $\overline{\tilde{G}}_k$,

iv.1. Effectuer la transformation compressive puis son inverse pour extrapoler, 414, 415, $\overline{\tilde{G}}_k$ vers $\overline{\tilde{W}}_k$ puis $\overline{\tilde{W}}_k$ vers $\overline{\tilde{G}}_k$,

iv.2. Calculer l'erreur quadratique 416 entre chacun des groupes complémentaires et le groupe $\tilde{G}_k{}^\beta$ transformé.

417, On obtient le score s2g (somme des erreurs quadratiques) pour tous les groupes et pour toutes les hypothèses de valeurs de complexité,

b. 418, Sortir le score final sfg pour la plateforme lié à toutes les complexités en sommant les deux scores s1g et s2g,

c. Choisir le meilleur score $s_{mg}$ (le score minimal) et sortir le couple (Transformée, $C_g$ complexité de la trajectoire de la plateforme) qui minimise les $s_{mg}$.

Cette valeur de complexité estimée $\hat{C}_g$ va être utilisée pour déterminer la trajectoire de l'objet en mouvement.

Lors du calcul d'erreur toute méthode autre que la méthode d'erreur quadratique peut être utilisée, sans sortir du cadre de l'invention, ceci pour toutes les étapes de calcul d'erreur lors de la validation croisée de type 1 ou lors de la validation croisée de type 2.

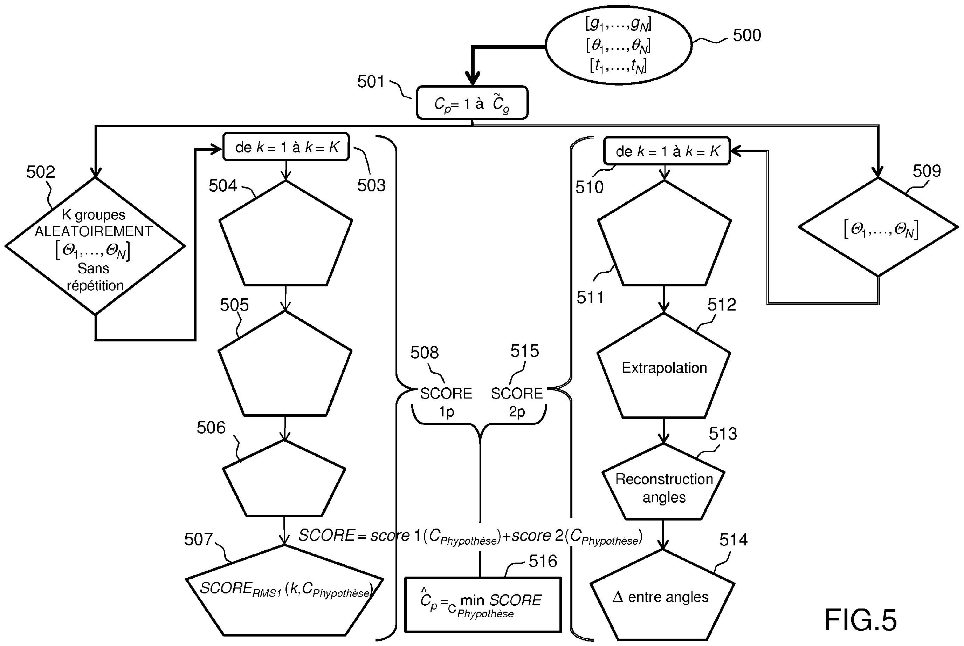

La figure 5 représente les étapes de la validation croisée de type 2 pour l'estimation de la complexité de la trajectoire de l'objet

les entrées du bloc sont les suivantes, 500 :

- Les angles $\theta$ = [$\theta_1$,...,$\theta_N$] estimés par le radiogoniomètre aux instants [$t_1$,...,$t_N$],
- Les positions $G$ = [$g_1$,....,$g_N$] du goniomètre aux instants , [$t_1$,...,$t_N$],
- La complexité estimée du goniomètre $\hat{C}_g$ ou une complexité maximum telle que $C_{quelconque} \leq \hat{C}_g$, valeur estimée lors de l'étape de validation croisée de type 1j,
- Le type de transformation compressive.

Pour chaque complexité $C_p$ allant de 1 à $\hat{C}_g$, 501

a. Construire K groupes d'angles de taille $\left\lfloor \frac{N}{K} \right\rfloor$. Pour construire ces groupes, on tire aléatoirement les angles dans l'ensemble $\theta$=[$\theta_1$,...,$\theta_N$] sans répétition, 502,

b. Pour chaque groupe k, k=1 à K, 503

i. 504, Effectuer l'estimation de la trajectoire de l'objet, en supposant un type de trajectoire de complexité $C_p$, à l'aide des angles qui ne sont pas dans le k-ième groupe (complémentaire du groupe k) et des positions du goniomètre à ces instants,

On obtient après transformation compressive inverse une trajectoire estimée $\hat{P}_k^{C_p}$ pour l'objet et pour un groupe k, pour une valeur de complexité,

ii. 505, On extrapole la trajectoire $\hat{P}_k^{C_p}$ estimée aux indices temporels propres au k-ième groupe d'angle,

On obtient pour une valeur de complexité la trajectoire complète $\tilde{\hat{P}}_k^{C_p}$,

iii. 506, A partir de $\tilde{\hat{P}}_k^{C_p}$ et de la trajectoire du goniomètre on reconstruit les angles qu'auraient estimé le goniomètre si l'objet observé était passé par tous les points de la trajectoire estimée complète $\tilde{\hat{P}}_k^{C_p}$,

iv. 507, On calcule l'erreur quadratique entre les angles du groupe k et les angles déterminés à l'aide de $C_p$ aux mêmes indices temporels,

On obtient un score pour le couple (k, $C_p$) correspondant à cette erreur $score_{RSMS1}(k, C_{phypothèse})$.

c. 508, Une fois que l'on a traité tous les groupes à $C_p$ fixé, on obtient le score s1p en effectuant la moyenne des scores sur les couples (k,$C_p$); puis le procédé va,

d. 509, Construire K groupes de taille $\left\lfloor \dfrac{N}{K} \right\rfloor$ à partir de $[\theta_1,...,\theta_N]$. Pour construire ces groupes, on découpe l'ensemble des angles mesurés $[\theta_1,...,\theta_N]$ dans l'ordre des indices et sans recouvrement en K groupes de taille $\left\lfloor \dfrac{N}{K} \right\rfloor$,

e. 510 Pour chaque groupe k, k=1 à K,:

v. 511, Effectuer l'estimation de la trajectoire à l'aide des angles qui ne sont pas dans le k-ième groupe (complémentaire du groupe k) et des positions du goniomètre,

On obtient après transformation compressive inverse de l'estimé une trajectoire $\hat{D}_k^{C_p}$,

vi. 512, On extrapole la trajectoire $\hat{D}_k^{C_p}$ aux indices temporels propres au k-ième groupe d'angle,

On obtient $\tilde{\hat{D}}_k^{C_p}$ complète,

vii. 513, A partir de $\tilde{\hat{D}}_k^{C_p}$ et de la trajectoire du goniomètre, on reconstruit les angles qu'aurait estimé le goniomètre si l'objet observé était passé par tous les points de $\tilde{\hat{D}}_k^{C_p}$,

viii. 514, On calcule l'erreur quadratique entre les angles du groupe k et les angles déterminés à l'aide de $\tilde{\hat{D}}_k^{C_p}$ aux mêmes indices temporels,

On obtient alors un autre type de score $score_{RMS2}(k, C_{phypothèse})$ pour le couple (k, $C_p$),

f. Une fois que l'on a traité tous les groupes à $C_p$ fixé, on obtient le score s2p en effectuant la moyenne des scores sur les couples (k, $C_p$), 515, après avoir traité tous les $C_p$ on dispose de Cp scores s2p,

2. Le score global est obtenu en sommant les scores s1p et s2p,
3. $\hat{C}_p$ est obtenu en minimisant la fonction (s1p et s2p) qui dépend des $C_p$ testés et du score associé, 516,

Connaissant les valeurs de complexité pour la plateforme et pour l'objet, le procédé peut ensuite dérouler les étapes présentées à la figure 3 afin de déterminer la trajectoire de l'objet ou encore d'avertir un opérateur afin de modifier la trajectoire de la plateforme.

Les étapes décrites dans le cadre de mesures d'angle d'azimut s'appliquent aussi avec des angles d'élévation pour une trajectoire en 3 dimensions ou d'autres mesures angulaires pouvant être utilisées.

Le procédé a défini la notion d'observabilité qui est une grandeur binaire : lorsqu'elle est vérifiée, il est possible d'estimer la trajectoire; lorsqu'elle n'est pas vérifiée, il n'est pas possible de converger vers une solution unique ou un espace contenant cette solution. Cette grandeur est définie, par exemple, de la façon suivante :

$$\Omega = \begin{cases} 1 \text{ si } C_g > C_p \\ 0 \text{ si } C_g \le C_p \end{cases}$$

Puis en fonction des conditions d'estimation :

- Si les conditions sont bonnes: on estime la trajectoire via une méthode asymptotiquement non biaisée connue de l'homme du métier (variable instrumentale VI, variable instrumentale pondérée VIP, variable instrumentale pondérée compensée du biais ou en anglo-saxon Bias Compensated Weightened Instrumental Variable BCWIV ou ML méthode de vraisemblance maximum),
- Si les conditions sont mauvaises on donne des conseils de manoeuvre élaborés pour augmenter la complexité de la trajectoire du dispositif de détection, un goniomètre par exemple.

L'estimabilité est, quant à elle, une grandeur graduelle qui fournit une indication sur les performances d'estimation optimales que l'utilisateur peut espérer avoir. Il est possible de choisir la Borne de Cramer-Rao (BCR) connue de l'homme du métier ou tout autre outil mathématique équivalent. Elle se définit à partir de la matrice d'information de Fisher $\mathbf{J}$ de l'estimateur : $\varepsilon = tr(\mathbf{J}^{-1})$ où l'opérateur $tr(.)$ désigne la trace d'une matrice soit la somme des éléments diagonaux.

Pour estimer la valeur de la complexité de l'objet observé pendant l'étape de validation croisée de type 2, le procédé peut mettre en oeuvre un estimateur pseudo-linéaire.

On définit à partir des notations vectorielles scalaires pour les points de trajectoires une notation complexe:

$$\mathbf{p}_n = [x_n, y_n]^T \rightarrow p_n^{complexe} = x_n + jy_n$$

Si bien que le vecteur $\mathbf{x} = [x_1,...,x_N]$ s'écrit $\mathbf{x} = \Re\{\mathbf{P}^{complexe} - \mathbf{G}^{complexe}\}$ et $\mathbf{y} = \Im\{\mathbf{P}^{complexe} - \mathbf{G}^{complexe}\}$ où $\Re\{\}$

et $\Im\{\}$ désignent respectivement la partie réelle et imaginaire.

Il est alors possible de déterminer un espace orthogonal sur lequel la projection de ces coordonnées est nulle :

$$(\mathbf{x}\ \ \mathbf{y}) \begin{pmatrix} -\sin(\theta_1) & 0 & \cdots & 0 \\ 0 & -\sin(\theta_2) & \ddots & \vdots \\ \vdots & \ddots & \ddots & 0 \\ 0 & \cdots & 0 & -\sin(\theta_N) \\ +\cos(\theta_0) & 0 & \cdots & 0 \\ 0 & +\cos(\theta_1) & \ddots & \vdots \\ \vdots & \ddots & \ddots & 0 \\ 0 & \cdots & 0 & +\cos(\theta_N) \end{pmatrix} = 0$$

$$(\mathbf{x}\ \ \mathbf{y}) \begin{pmatrix} -diag(\sin(\theta)) \\ +diag(\cos(\theta)) \end{pmatrix} = 0$$

où l'opérateur diag désigne la matrice carré dont les éléments diagonaux sous les éléments du vecteur en paramètre. On peut réécrire cette équation après application de la transformation compressive $T(\mathbf{x}\ \mathbf{y}) = (\omega_x\ \omega_y)$.

$$(\omega_x\ \ \omega_y) \begin{pmatrix} T & 0 \\ 0 & T \end{pmatrix} \begin{pmatrix} -diag(\sin(\theta)) \\ +diag(\cos(\theta)) \end{pmatrix} = 0$$

Soit encore

$$(\omega_x\ \ \omega_y) \begin{pmatrix} -Tdiag(\sin(\theta)) \\ +Tdiag(\cos(\theta)) \end{pmatrix} = 0$$

Que l'on peut mettre sous la forme :

$$(\omega_x\ \ \omega_y)\Theta^{\perp} = 0$$

Ceci fournit déjà un espace contenant la solution qui est celui de du noyau $\Theta^\perp$. Cet espace donnera des indications sur la solution dans le cas où la complexité est insuffisante pour l'estimation. Une information supplémentaire sur la vitesse ou distance entre le capteur et l'objet fixerait un espace pour les trajectoires compatibles.

Dans le cas où l'observabilité est assurée, l'estimateur pseudo-linéaire ou EPL permet d'effectuer l'estimation. L'EPL peut être effectué avec tout type de transformation compressive linéaire suggérée par la forme de la trajectoire et les tests effectués.

De plus il est possible de définir assez simplement à partir des équations ci-dessus la matrice d'information de Fisher correspondante :

$$\mathbf{J} = \left(\Theta^\perp\right) diag(\rho)^{-1} \Sigma diag(\rho)^{-1} \left(\Theta^\perp\right)^T$$

où :

- $\rho = |\mathbf{P - G}|$ sont les distances entre l'objet et le capteur
- $\Sigma$ est la matrice de covariance du bruit de mesure sur les angles

Cette matrice peut bien évidement être calculée avec toutes les approximations possibles :

- Limitation de la complexité à $\min(C_p, C_g)$,
- Distance entre le capteur et l'estimée de la position de l'objet au lieu de la vraie distance,
- Matrice de covariance du bruit de mesure estimée.

Les trajectoires estimées par le procédé selon l'invention sont alors transmises pour être, soit affichées à un opérateur, soit injectées dans un système de niveau supérieur (système d'information ou autre). Elles contribuent ainsi à la connaissance de la situation radioélectrique entourant le porteur.

Sans sortir du cadre de l'invention, le procédé peut s'appliquer pour estimer la trajectoire d'un objet reconnaissable grâce à sa signature et non équipé d'émetteur pour la mise en oeuvre de l'invention. Toute méthode de calcul d'erreur entre valeurs peut être utilisée. Il en est de même pour les transformations compressives permettant de diminuer le nombre de données mises en oeuvre dans les calculs qui seront choisies, par exemple en fonction du type de trajectoire. La description a utilisé à titre d'exemple un estimateur pseudo linéaire EPL, mais le procédé pourrait mettre en oeuvre tout type d'estimateur adapté.

L'invention présente l'avantage d'être utilisée pour différentes plateformes en mouvement équipée d'un radiogoniomètre ou un dispositif similaire. Elle peut être utilisée dans tous types de plateformes mouvantes munies d'un radiogoniomètre. Elle permet d'estimer le degré de complexité de la trajectoire d'un objet de manière automatique, qu'il s'agisse d'un point, d'une droite ou d'un mouvement plus complexe.

## Revendications

1. - Procédé pour estimer une trajectoire d'un premier objet (10) au moyen d'une plateforme (11) en déplacement équipée de moyens de mesure (13) d'au moins un angle entre le premier objet (10) et la plateforme selon une direction donnée comportant au moins les étapes suivantes :

    • Déterminer un ensemble de points correspondant à la trajectoire de la plateforme pour un intervalle de temps donné $[t_1,..t_N]$,
    • Acquérir un ensemble de valeurs d'angles sur le même intervalle de temps $[t_1,..t_N]$, et **caractérisé en ce que** :
    • On définit la complexité $C_g$ de la trajectoire de la plateforme (11) en calculant l'erreur existant entre les points de la trajectoire partitionnés en plusieurs groupes de points et des points de la trajectoire obtenus par extrapolation après compression de la trajectoire,
    • On détermine pour le même intervalle de temps $[t_1,..t_N]$, la complexité $C_p$ de la trajectoire du premier objet (10) à partir d'une valeur de complexité estimée $C_g$ de la trajectoire de la plateforme et de l'erreur calculée entre des valeurs d'angles $\theta = [\theta_1,...,\theta_N]$ mesurées et partitionnés en K groupes et des valeurs d'angles obtenues par extrapolation d'une trajectoire estimée de l'objet,
    • On compare la valeur de la complexité $C_g$ de la plateforme et si la valeur de la complexité de la plateforme est supérieure à la valeur de la complexité $C_p$ de l'objet, alors estimer la trajectoire de l'objet, sinon, transmettre un signal ou une information pour ajuster la trajectoire de la plateforme.

**2.** - Procédé selon la revendication 1 caractérisé en qu'il comporte au moins les étapes suivantes :

a) estimer la complexité $C_g$ associée à la trajectoire de la plateforme en distribuant, pour une valeur de complexité définie, les points de la trajectoire de façon aléatoire en K groupes, appliquer une transformation compressive et son inverse sur un groupe de points pour obtenir un deuxième groupe de points pour chaque complexité, et extrapoler les points, puis déterminer l'erreur existant $s_{1g}$ entre les points définissant la trajectoire de la plateforme et les points obtenus par extrapolation, réitérer ces étapes en travaillant sur un ensemble de groupes de points par tirage aléatoire et sans recouvrement, puis définir une deuxième valeur d'erreur $s_{2g}$, définir la valeur d'erreur minimale et la transformation compressive associée,

b) estimer la complexité $C_p$ de la trajectoire de l'objet en mouvement à partir d'une valeur de complexité estimée de la plateforme, en construisant K groupes d'angles par tirage aléatoire sans répétition, pour chaque groupe k, en appliquant une transformation compressive afin de déterminer une première trajectoire pour l'objet et en extrapolant la valeur de la première trajectoire pour les indices temporels propres au groupe k, en reconstruisant les valeurs d'angles observées par la plateforme si l'objet avait suivie cette deuxième trajectoire extrapolée, et en calculant la valeur de l'erreur pour obtenir un premier score $s_{1p}$, puis en réitérant ces étapes pour un ensemble de groupes d'angles obtenus par un découpage dans l'ordre des indices des angles et sans recouvrement et pour chaque valeur de complexité choisie, afin d'obtenir un deuxième score, définir la valeur minimale,

c) comparer la valeur de la complexité $C_g$ de la trajectoire de la plateforme et la valeur de la complexité $C_p$ de la trajectoire de l'objet et si $C_g$ et supérieure à $C_p$ alors exécuter un algorithme d'estimation de la trajectoire de l'objet, sinon modifier la complexité de la trajectoire de la plateforme.

**3.** - Procédé selon la revendication 1 **caractérisé en ce que** l'on calcule les valeurs d'erreur par une méthode de calcul d'erreurs quadratiques.

**4.** - Procédé selon l'une des revendications précédentes **caractérisé en ce que** l'on mesure les angles par goniométrie ou radiogoniométrie.

**5.** - Procédé selon l'une des revendications 1 à 3 **caractérisé en ce que** l'on utilise une signature de l'objet afin de déterminer les angles.

**6.** - Procédé selon l'une des revendications 1 à 5 **caractérisé en ce que** l'objet est en mouvement par rapport à la plateforme.

**7.** - Système pour estimer une trajectoire d'un premier objet (10) en mouvement par rapport à une plateforme (11) en déplacement équipé de moyens de mesure (13) d'au moins un angle entre le premier objet (10) et la plateforme selon une direction donnée **caractérisé en ce que** la plateforme (11) comporte des moyens adaptés à exécuter les étapes du procédé selon l'une des revendications 1 à 5.

**8.** - Système selon la revendication 7 **caractérisé en ce que** la plateforme (11) est équipée d'un goniomètre.

**Patentansprüche**

**1.** Verfahren zum Schätzen einer Bewegungsbahn eines ersten Objekts (10) mittels einer sich bewegenden Plattform (11), die mit Mitteln (13) zum Messen wenigstens eines Winkels zwischen dem ersten Objekt (10) und der Plattform in einer gegebenen Richtung ausgestattet ist, das wenigstens die folgenden Schritte beinhaltet:

• Bestimmen eines Satzes von Punkten entsprechend der Bewegungsbahn der Plattform für ein gegebenes Zeitintervall $[t_1,...t_N]$,
• Erfassen eines Satzes von Winkelwerten im selben Zeitintervall $[t_1,...t_N]$, **dadurch gekennzeichnet, dass**:
• die Komplexität $C_g$ der Bewegungsbahn der Plattform (11) durch Berechnen des Fehlers definiert wird, der zwischen den in mehrere Punktegruppe partitionierten Punkten der Bewegungsbahn und durch Extrapolation nach Kompression der Bewegungsbahn erhaltenen Punkten der Bewegungsbahn existiert,
• für dasselbe Zeitintervall $[t_1,...t_N]$ die Komplexität $C_p$ der Bewegungsbahn des ersten Objekts (10) auf der Basis eines geschätzten Komplexitätswertes $C_g$ der Bewegungsbahn der Plattform und des berechneten Fehlers zwischen den gemessenen und in K Gruppen partitionierten Winkelwerten $\theta=[\theta_1, ..., \theta_N]$ und durch Extrapolation einer geschätzten Bewegungsbahn des Objekts erhaltenen Winkelwerten bestimmt wird,
• der Wert der Komplexität $C_g$ der Bewegungsbahn der Plattform verglichen wird und wenn der Wert der Komplexität der Plattform größer ist als der Wert der Komplexität $C_p$ des Objekts, die Bewegungsbahn des Objekts geschätzt wird, andernfalls ein Signal oder eine Information zum Justieren der Bewegungsbahn der Plattform gesendet wird.

2. Verfahren nach Anspruch 1, **dadurch gekennzeichnet, dass** es wenigstens die folgenden Schritte beinhaltet:

a) Schätzen der mit der Bewegungsbahn der Plattform assoziierten Komplexität $C_g$ durch Verteilen, für einen definierten Komplexitätswert, der Punkte der Bewegungsbahn auf Zufallsbasis in K Gruppen, Anwenden einer Kompressionstransformation und ihren Umkehr auf eine Gruppe von Punkten zum Erhalten einer zweiten Gruppe von Punkten für jede Komplexität, und Extrapolieren der Punkte, dann Bestimmen des existierenden Fehlers $s_{1g}$ zwischen den die Bewegungsbahn der Plattform definierenden Punkten und den durch Extrapolation erhaltenen Punkten, Wiederholen dieser Schritte durch Bearbeiten eines Satzes von Punktegruppen im Zufallsverfahren und ohne Überlappung, dann Definieren eines zweiten Fehlerwertes $s_{2g}$, Definieren des Minimalfehlerwertes und der assoziierten Kompressionstransformation,

b) Schätzen der Komplexität $C_p$ der Bewegungsbahn des Objekts in Bewegung auf der Basis eines geschätzten Komplexitätswertes der Plattform, durch Konstruieren von K Winkelgruppen im Zufallsverfahren ohne Wiederholung für jede Gruppe K, durch Anwenden einer Kompressionstransformation, um eine erste Bewegungsbahn für das Objekt zu bestimmen, und durch Extrapolieren des Wertes der ersten Bewegungsbahn für die der Gruppe k eigenen Zeitindexe, durch Rekonstruieren der von der Plattform beobachteten Winkelwerte, wenn das Objekt diese zweite extrapolierte Bewegungsbahn verfolgt hat, und durch Berechnen des Wertes des Fehlers, um einen ersten Score $s_{1p}$ zu erhalten, dann Wiederholen dieser Schritte für einen Satz von Winkelgruppen, erhalten durch einen Schnitt in der Größenordnung der Indexe der Winkel und ohne Überlappung und für jeden gewählten Komplexitätswert, um einen zweiten Score zu erhalten, Definieren des Minimalwertes,

c) Vergleichen des Wertes der Komplexität $C_g$ der Bewegungsbahn der Plattform und des Wertes der Komplexität $C_p$ der Bewegungsbahn des Objekts, und wenn $C_g$ größer ist als $C_p$, Ausführen eines Algorithmus zum Schätzen der Bewegungsbahn des Objekts, andernfalls Modifizieren der Komplexität der Bewegungsbahn der Plattform.

3. Verfahren nach Anspruch 1, **dadurch gekennzeichnet, dass** die Fehlerwerte mit einem Verfahren des Berechnens von quadratischen Fehlern berechnet werden.

4. Verfahren nach einem der vorherigen Ansprüche, **dadurch gekennzeichnet, dass** die Winkel durch Goniometrie oder Radiogoniometrie gemessen werden.

5. Verfahren nach einem der Ansprüche 1 bis 3, **dadurch gekennzeichnet, dass** eine Signatur des Objekts benutzt wird, um die Winkel zu bestimmen.

6. Verfahren nach einem der Ansprüche 1 bis 5, **dadurch gekennzeichnet, dass** das Objekt mit Bezug auf die Plattform in Bewegung ist.

7. System zum Schätzen einer Bewegungsbahn eines ersten Objekts (10) in Bewegung mit Bezug auf eine sich bewegende Plattform (11), die mit Mitteln (13) zum Messen von wenigstens einem Winkel zwischen dem ersten Objekt (10) und der Plattform in einer gegebenen Richtung ausgestattet ist, **dadurch gekennzeichnet, dass** die Plattform (11) Mittel umfasst, die zum Ausführen der Schritte des Verfahrens nach einem der Ansprüche 1 bis 5 ausgelegt sind.

8. System nach Anspruch 7, **dadurch gekennzeichnet, dass** die Plattform (11) mit einem Goniometer ausgestattet ist.

**Claims**

1. - Method for estimating a trajectory of a first object (10) by means of a moving platform (11) equipped with means (13) for measuring at least one angle between the first object (10) and the platform according to a given direction comprising at least the following steps:

• determining a set of points corresponding to the trajectory of the platform for a given time interval $[t_1,..t_N]$,
• acquiring a set of values of angles over the same time interval $[t_1,..t_N]$, and **characterized in that**:
• the complexity $C_g$ of the trajectory of the platform (11) is defined by calculating the error existing between the points of the trajectory partitioned into a plurality of groups of points and points of the trajectory obtained by extrapolation after compression of the trajectory,

• for the same time interval $[t_1,..t_N]$, the complexity $C_p$ of the trajectory of the first object (10) is determined from an estimated complexity value $C_g$ of the trajectory of the platform and of the error calculated between values of angles $\theta = [\theta_1,...,\theta_N]$ measured and partitioned into K groups and values of angles obtained by extrapolation of an estimated trajectory of the object,

• the value of the complexity $C_g$ of the platform is compared and, if the value of the complexity of the platform is greater than the value of the complexity $C_p$ of the object, then estimating the trajectory of the object, otherwise, transmitting a signal or an information item to adjust the trajectory of the platform.

2. - Method according to Claim 1, **characterized in that** it comprises at least the following steps:

a) estimating the complexity $C_g$ associated with the trajectory of the platform by distributing, for a defined complexity value, the points of the trajectory randomly in K groups, applying a compressive transformation and its inverse to a group of points to obtain a second group of points for each complexity, and extrapolating the points, then determining the error existing $s_{1g}$ between the points defining the trajectory of the platform and the points obtained by extrapolation, reiterating these steps by working on a set of groups of points by random draw and without overlap, then defining a second error value $s_{2g}$, defining the minimum error value and the associated compressive transformation,

b) estimating the complexity $C_p$ of the trajectory of the moving object from an estimated complexity value of the platform, by constructing K groups of angles by random draw without repetition, for each group k, by applying a compressive transformation in order to determine a first trajectory for the object and by extrapolating the value of the first trajectory for the time indices specific to the group k, by reconstructing the values of angles observed by the platform if the object had followed this extrapolated second trajectory, and by calculating the value of the error to obtain a first score $s_{1p}$, then by reiterating these steps for a set of groups of angles obtained by a subdivision in the order of the indices of the angles and without overlap and for each chosen complexity value, in order to obtain a second score, defining the minimum value,

c) comparing the value of the complexity $C_g$ of the trajectory of the platform and the value of the complexity $C_p$ of the trajectory of the object and, if $C_g$ is greater than $c_p$, then executing an algorithm for estimating the trajectory of the object, otherwise modifying the complexity of the trajectory of the platform.

3. - Method according to Claim 1, **characterized in that** the error values are calculated by a quadratic error calculation method.

4. - Method according to one of the preceding claims, **characterized in that** the angles are measured by goniometry or radio goniometry.

5. - Method according to one of Claims 1 to 3, **characterized in that** a signature of the object is used in order to determine the angles.

6. - Method according to one of Claims 1 to 5, **characterized in that** the object is moving relative to the platform.

7. - System for estimating a trajectory of a first object (10) moving relative to a moving platform (11) equipped with means (13) for measuring at least one angle between the first object (10) and the platform according to a given direction, **characterized in that** the platform (11) comprises means suitable for executing the steps of the method according to one of Claims 1 to 5.

8. - System according to Claim 7, **characterized in that** the platform (11) is equipped with a goniometer.

FIG.1

FIG.2

FIG.3

Avec:

$$g_n = \begin{bmatrix} x_n^g \\ y_n^g \\ z_n^g \end{bmatrix}$$

30 — $[g_1,\ldots,g_N]$ $[\theta_1,\ldots,\theta_N]$ $[t_1,\ldots,t_N]$

31 — validation croisée de type 1

32 — Cg

33 — validation croisée de type 2

34 — Cg>Cp

35 — Positions de l'objet observé $[t_1,\ldots,t_N]$ $[\hat{p}_1,\ldots,\hat{p}_N]$

36 — Cp

**400** $[g_1,\ldots,g_N]$ $[t_1,\ldots,t_N]$

**401** de $C_g = 1$ à $C_g = C_{g\,max}$

**402** $\widetilde{G} = \left[g_{J(1)},\ldots,g_{J(N)}\right]$

**403** $\widetilde{G}_k = \left[g^k_{H(1)},\ldots,g^k_{H(C_g)}\right]$

**404** $k = 1$ à $k = K$

**405** $\widetilde{G}_k = \left[g^k_{H(1)},\ldots,g^k_{H(C_g)}\right] \Rightarrow \widetilde{W}_k$

**406** $\widetilde{W}_k \Rightarrow \hat{G}_k$

**407** Extrapoler sur $\hat{G}_k$

**408** Erreur

**409** SCORE 1

**417** SCORE 2

**418** $S_{fg}$ $\hat{C}_g = \min SCORE$

**410** $\widetilde{G} = \left[g_{L(1)},\ldots,g_{L(N)}\right]$

**411** $\widetilde{G}_k = \left[g^k_{L(1)},\ldots,g^k_{L\left[\left\lfloor\frac{N}{K}\right\rfloor\right]}\right]$

**412** $k = 1$ à $k = K$

**413** $\overline{\widetilde{G}}_k$

**414** $\overline{\widetilde{G}}_k \Rightarrow \overline{\widetilde{W}}_k$

**415** $\overline{\widetilde{W}}_k \Rightarrow \overline{\hat{G}}_k$

**416** $\Delta$ entre $\hat{G}_k \,/\, \overline{\hat{G}}_k$

FIG.4

FIG.5

EP 2 990 822 B1

## RÉFÉRENCES CITÉES DANS LA DESCRIPTION

**Documents brevets cités dans la description**

- FR 2833084


**Littérature non-brevet citée dans la description**

- Bearings-only target motion analysis based on a multihypothesis Kalman filter and adaptive ownship motion control. **KRONHAMN.** IEEE, proceedings; radar, sonar&navigation. institution of electrical engineers, 03 Août 1998, vol. 145, 247-252